# EUROPEAN PATENT SPECIFICATION

(11) **EP 1 713 186 B1**
(45) Date of publication and mention of the grant of the patent: **19.11.2008**
(21) Application number: 06117925.5
(22) Date of filing: 26.02.2001
(51) Int. Cl.: H04B 7/08, H04L 27/26, H04L 1/06

(54) **Circuit arrangement for carrying out spatial diversity operations with a digital signal receiver**
Schaltungsanordnung zur Durchführung der räumlichen Diversitätsoperationen mit einem Empfänger für digitale Signale
Circuit permettant de mettre en oeuvre des operations de diversite spatiale avec un recepteur de signaux numeriques

(30) Priority: 28.02.2000 DE 10009284
(43) Date of publication of application: 18.10.2006
(62) Divisional of application: 01927709.4
(73) Proprietor: Nokia Corporation, 02150 Espoo (FI)
(72) Inventor: Schwoerer, Ludwig, 45525, Hattingen (DE)
(74) Representative: Brax, Matti Juhani

(56) References cited:
- EP-A- 0 975 101
- JP-A- 2000 041 020
- US-A- 5 528 581
- RINNE J: "Some Elementary Suboptimal Diversity Reception Schemes for DVB-T in Mobile Conditions" IEEE TRANSACTIONS ON CONSUMER ELECTRONICS, IEEE INC. NEW YORK, US, vol. 46, no. 3, August 2000 (2000-08), pages 847-850, XP002163931 ISSN: 0098-3063

## Description

The invention relates to a circuit arrangement for carrying out spatial diversity operations with a digital signal receiver, in particular a mobile DVB receiver, for receiving terrestrially and digitally transmitted television transmissions while the receiver is moving. Such receivers are designed to receive signals to the DVB-T Standard (Digital Video Broadcasting - Terrestrial).

A prior art OFDM Receiver is known from EP-A-0 975 101.

Furthermore, the invention can also be used for other digital signal receivers which receive terrestrially transmitted signals and in which changing influences from multipath reception and interference are intended to be suppressed.

Terrestrial radio transmissions such as television transmissions are subject to various interference influences. These are, in particular, multipath reception of transmitted waves resulting from echoes from the vicinity of the receiving antenna or from RF interference sources in the transmitted frequency band. In this case, delay times of different duration in different transmission paths on which the transmitted waves reach a receiving antenna a number of ways depending on the site conditions, cause errors in the received signal.

With the analogue transmission method used in the past, residual sideband AM, multipath reception and interference influence the picture quality especially the form of shadowing of the visible contours and picture noise. Nevertheless, the original picture can still be identified even if the signal-to-noise ratio in the television picture is relatively poor.

In contrast to this, with a digital modulation method for broadcast television with terrestrial transmission, such as DVB-T, the susceptibility to interference is particularly high owing to the data density used in the physical transmission channel. The said interference increases the bit error rate during transmission. Errors up to a certain gross bit error rate can be corrected completely by using known error correction devices FEC, and these allow the picture to be reproduced virtually without any interference. However, if the bit error rate exceeds a threshold value, it is no longer possible to reproduce the transmitted picture at all.

In order to allow picture reproduction without interference to a very large extent for digital terrestrial television transmission despite the expectation of reception echoes and despite the high data rate of up to about 30 Mbit/s to be transmitted, the OFDM method (Orthogonal Frequency Division Multiplex) was defined as the transmission standard for DVB-T. This is a multicarrier method, in which the entire available bandwidth is split into a large number of mutually independent, that is to say parallel, subcarriers. The transmission then takes place at a considerably lower data rate in each subband.

In principle, the OFDM method corresponds to a large number of parallel narrowband modulators in the transmitter, and corresponding demodulators in the receiver. In practice, the parallel channels in the transmitter are obtained by means of a cost-effective and powerful computation process, inverse Fourier transformation (IFFT). The transmitted signal is produced by adding the subcarriers and subsequently converting them to the RF band. According to the DVB-T Standard, the transmitted signal is quadrature amplitude modulated (QAM). Both 4-QAM or 16-QAM as well as 64-QAM can be used in this case.

In a DVB receiver, the reception and selection of the television signal as well as the reverse conversion of the filtered digital signal are carried out first of all, using an analogue/digital converter in an analogue tuner.

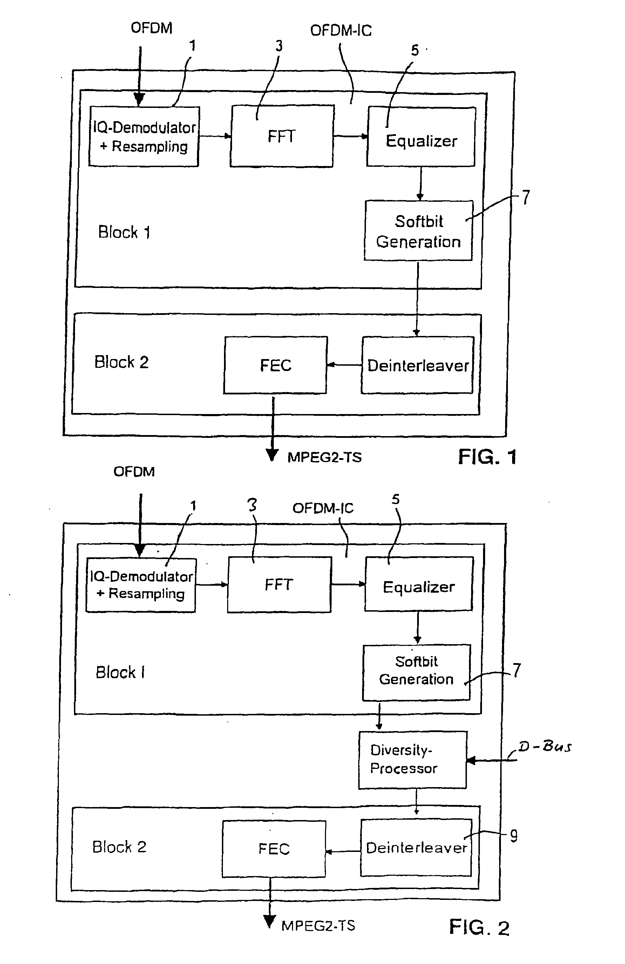

The further signal processing is generally carried out in a complex integrated circuit OFDM-IC, which is known and is shown in Figure 1. This converts the digital multiplexed signal OFDM into an error-corrected MPEG-2 transport stream MPEG2-TS. The major known process steps for this are as follows:

The suppressed carrier signal is recovered in a quadrature amplitude modulator 1, a so-called IQ demodulator. This uses a resampling process to correct frequency errors and jitter.

A fast Fourier transformation (FFT), box 3, splits the received signal into its subbands.

Synchronization information in the form of pilot signals is transmitted via some of the available subcarriers. An equalizer 5 uses the pilot signals for amplitude and phase angle correction of the subcarrier signals with respect to one another. The information in the parallel subbands is provided as a serial digital transport stream at the output of the equalizer.

In the following stage 7, the received modulation symbols are identified, in accordance with the type of modulation used, in their position in the locus diagram. Corresponding association with the closest symbol is carried out irrespective of whether the symbol is actually located at a nominal position in the locus diagram. A decision in the form of a so-called hard decision is in this case made in the integrated circuit. If, for example, 64-QAM has been used for modulation, then the specific position of each modulation symbol in the locus diagram then defines its importance by means of a six-bit long data word. In order to identify the magnitude of any possible error in this decision, three further bits are generated at this point in parallel to each of the six bits of the hard decision, and identify the error between the nominal position of the modulation symbol and the actual position. A subsequent so-called softbit process is thus used to produce information which indicates the probability with which it has been possible to identify the received modulation symbol correctly.

In the interests of clear illustration, the circuit stages 1 to 7 have been combined to form a circuit block, Block 1.

After identification and the decision process for the received modulation symbols, error correction, which is known per se, is carried out in Block 2 in the integrated circuit. Since each subband represents a specific narrowband transmission channel and the subcarriers are located close to one another in the frequency band, adjacent subbands are also influenced to a similar extent by interference. This means that, in the case of cohesive data which are transmitted on closely adjacent carriers, the unavoidable interference on the transmission channel leads to relatively large areas subject to interference in the received data. However, errors which follow one another closely lead to the error correction system being overloaded considerably more quickly than a uniform, random distribution. Databits which are adjacent in time are distributed between the data carriers in accordance with a pseudo-random pattern by interleaving at the transmitter end. On reception, the interleaving is reversed in a deinterleaver 9, which makes optimum use of the performance of the error correction in the integrated circuit OFDM-IC.

The subsequent error correction system FEC links an external Reed-Solomon code with an internal convolution code. In this case, the bit errors which have occurred during transmission can be corrected even if the channel conditions are poor.

Thus, by selecting a suitable antenna location, the reception and reproduction of television pictures using a fixed-position receiver present no problems. Errors can often be at least reduced by slightly changing the position of the receiving antennas.

However, the reception of echo waves creates a problem for a mobile DVB-T receiver, whose reception location changes continuously, for example during reception in a vehicle. In this case, the poor environmental structure can lead to a reception which is locally subject to interference, so that the bit error rate of the received signal exceeds the threshold value and reproduction of the transmitted picture is no longer possible in certain vehicle positions.

In this case, so-called spatial diversity operation for reception, using different physically distributed receiving antennas, provides a remedy. In this case, as is known, a comparison device in the mobile digital television receiver selects the best received signal from at least two different receiving antennas.

However, a problem that occurs in this case is to find a suitable signal point for assessing the quality of the various received signals. For this purpose, conventional analogue receivers normally have a separate tuner for each antenna, which at least amplifies and selects the signals received by the antennas, so that at least the amplitudes of the received signals on their carriers can be compared with one another.

Only inadequate information relating to the quality of the input signals of the various antennas can be found at the input of the integrated circuit OFDM-IC of a digital signal receiver to which the multiplexed signal OFDM which is selected and digitized by the tuners is applied.

Since the errors are corrected in the MPEG-2 transport stream MPEG2-TS at the output of the integrated circuit OFDM-IC and deinterleaving has been carried out, this signal point is also not very suitable for signal comparison. This gives a result only if the bit error rate has already exceeded the said critical threshold value and the reception channel selected in the diversity mode no longer allows any reproduction of the transmitted picture at all.

A patent application EP-A-0975101 discloses a known digital receiver for antenna diversity comprising a diversity processing unit, which has, based on an estimation of a propagation path characteristic, the propagation path for each subcarrier and selects the path exhibiting a high amplitude. The serial transport stream is established at the output of the demodulator.

Thus, for successful diversity operation, it is desirable to compare the quality of the various received signals at a point which is in the area of the described integrated circuit OFDM-IC. This means that a special circuit would be necessary which, up to a certain signal point, contains a number of identical signal input parts, and a selection device would be required to supply the best received signal to the circuit part which is responsible for final preprocessing of the transport stream MPEG2-TS. This would result in the development of a special integrated circuit , developed only for diversity operation, in which the first circuit stages in the signal flow would be duplicated. Owing to the small quantities to be expected, the development and production of such an integrated circuit is very costly.

The object of the invention is therefore to provide a solution which is better in terms of the outlay for costs and material. In accordance with an aspect of the invention there is provided a digtal receiver according to claim 1. In accordance with another aspect of the invention there is provided a method according to claim 9. In accordance with yet another aspect of the invention there is provided integrated circuit according to claim 10.

According to the invention, the object is achieved in that an integrated circuit for an OFDM receiver is modified such that this circuit can be used as an individual item in conventional stationary DVB receivers, and can be used as a number of items in mobile DVB receivers with spatial diversity operation.

The invention is based on a circuit arrangement which has a number of reception paths, with receiving antennas which are physically separated from one another. An RF input circuit and a complex integrated circuit (OFDM-IC) for preprocessing a selected and digitized multiplexed signal (OFDM) to form an MPEG-2 transport stream (MPEG-2-TS) are provided for each receiving antenna.

In a known manner, the complex integrated circuits (OFDM-IC) contain:
a quadrature amplitude modulator (1) for recovering the suppressed carrier signal and for correcting frequency errors and jitter by resampling,
a device (3) for fast Fourier transformation (FFT) for splitting the received signal (OFDM) into its subbands,
an equalizer (5) for amplitude and phase angle correction of the subbands in order to convert the information in the parallel subbands into a serial digital transport stream,
a decision-making apparatus (7) for identifying and for decision-making with regard to the physical position of the received modulation symbols in a locus diagram and for generating softbits which identify the error between the nominal position and the actual position,
a deinterleaver (9) for deinterleaving subbands which are interleaved for transmission,
an error correction system FEC for error correction in a transmitted transport stream with digital media data.

The invention will be explained in the following text with reference to an exemplary embodiment.

In the corresponding figures:
Figure 1 shows an embodiment of a known complex integrated circuit for connection to the outputs of an RF input circuit and for preprocessing an MPEG-2 transport stream,
Figure 2 shows an embodiment of the complex integrated circuit according to the invention with a diversity processor in the signal path,
Figure 3 shows an embodiment of the circuit arrangement according to the invention for diversity operation of a DVB receiver with two reception paths and two identical complex integrated circuits according the invention.

Figure 2 shows a practical embodiment of a complex integrated circuit OFDM-IC according to the invention. In addition to the known circuit stages 1-9 described above and the error correction system FEC a diversity processor 11 is, according to the invention, located in the signal path between an equalizer 5 and the deinterleaver 9, and has a databus D-bus with external connections for the integrated circuit OFDM-IC. The diversity processor 11 is thus located at a point at which the information in the parallel subbands has already been converted into the originally serial digital transport stream.

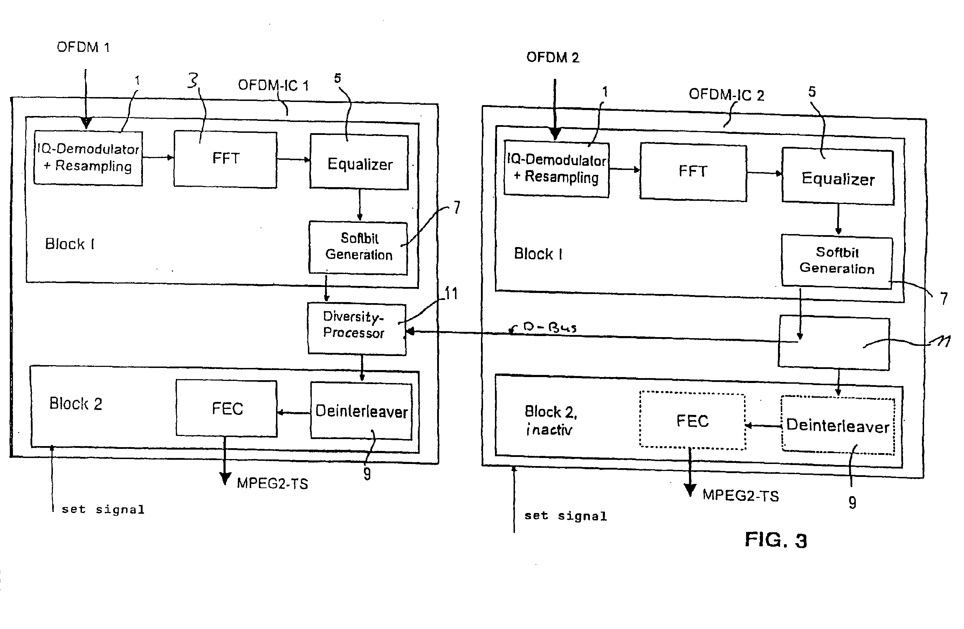

According to the invention, as shown in Figure 3, each RF input circuit is connected to a complex integrated circuit OFDM-IC as shown in Figure 2.

The diversity processors contain a comparison unit for comparing quality criteria, by means of which the reception quality of its own transport stream can be compared with the reception quality of the transport stream from another reception path, in order to switch between the serial digital transport streams of different reception paths.

According to one particularly advantageous embodiment of the invention, the diversity processor 11 in the complex integrated circuit OFDM-IC is located between the decision-making apparatus 7 for identifying and for decision-making with regard to the physical position of the received modulation symbols in the locus diagram and the deinterleaver 9. The softbits can in consequence be used advantageously as a quality criterion for the reception quality of the preprocessed transport streams.

According to a further advantageous embodiment, the complex integrated circuit OFDM-IC has a set input which, firstly, uses a specific set signal to switch the circuit to a master mode, in which the diversity processor 11 is activated for receiving the transport stream from another complex integrated circuit OFDM-IC 2 in order to compare the quality of the preprocessed transport streams. On the other hand, the complex integrated circuit (OFDM-IC) for the other reception paths can be switched to the slave mode by means of another set signal.

With little additional circuit complexity, the circuit according to the invention allows an integrated circuit for the OFDM-IC to be produced cost-effectively in large quantities, which circuit can not only be used in every reception path in a mobile DVB receiver, but can also be configured to the master or slave mode by means of external set signals.

Furthermore, when used in a mobile DVB receiver, one reception path can be configured for a picture-in-picture application for non-diversity operation.

## Claims

1. Digital receiver for diversity operation with reception paths which have receiving antennas which are physically separated from one another, an RF input circuit for each receiving antenna, and an integrated circuit arranged to process a received signal in a transport stream, the integrated circuit comprising:
a quadrature amplitude demodulator (1) arranged to demodulate the received signal,
a device (3) for fast Fourier transformation (FFT) arranged to split the received signal into its parallel subbands,
an equalizer (5) arranged to amplitude and phase angle correct the parallel subbands in order to provide the information in the parallel subbands into a serial digital transport stream,
a decision-making apparatus (7) arranged to identify and to decision-make with regard to the physical position of the received modulation symbols in a locus diagram and to generate softbits relating to the reliability of the decision,
a deinterleaver (9) arranged to deinterleave subbands which are interleaved for transmission,
an error correction system (FEC) arranged to error correct the transport stream with digital media data, **characterized in that**
each RF input circuit is connected to the integrated circuit which has a diversity processor (11) in the signal path between a point, at which the information in the parallel subbands is converted into the serial digital transport stream, and the deinterleaver (9), wherein the diversity processor (11) contains a databus (D-bus) for the external connections of the integrated circuit , and **in that**
the diversity processor has a comparison unit arranged to compare quality criteria, by means of which the reception quality of the transport stream preprocessed in its own reception path can be compared with the reception quality of a transport stream preprocessed in another reception path, in order to switch between the serial digital transport streams of different reception paths.

2. Digital receiver according to claim 1, wherein the point at which the information in the parallel subbands is converted into the serial digital transport stream is located downstream of the equalizer (5).

3. Digital receiver according to claim 1, wherein the diversity processor (11) in the integrated circuit is located between the decision-making apparatus (7) arranged to identify and to decision-make with regard to the physical position of the received modulation symbols in the locus diagram and the deinterleaver (9), and in that the softbits are used as a quality criterion for the reception quality of the preprocessed transport streams.

4. Digital receiver according to Claim 1, wherein the integrated circuit has a set input which, firstly, uses a specific set signal to switch the circuit to a master mode, in which the diversity processor (11) is activated for receiving the transport stream from the another integrated circuit of the another reception path in order to compare the quality of the transport streams and, secondly, switches the the another integrated circuit to the slave mode by means of another set signal.

5. Digital receiver according to Claim 1, wherein on switching to the slave mode, the set signal inhibits the operating current consumption of the deinterleaver (9) and of the error correction system FEC.

6. Digital receiver according to Claim 1, wherein a further set input, which uses a specific set signal to bridge the signal path of the diversity processor and/or deactivates the comparison unit so that the integrated circuit operates conventionally without comparing the preprocessed transport streams.

7. Digital receiver according to Claim 1, wherein the digital receiver is configured for a picture-in-picture application for non-diversity operation.

8. Digital receiver according to any preceding claims, wherein the digital receiver comprises a mobile DVB receiver.

9. A method for diversity operation of a digital signal receiver with reception paths which have receiving antennas which are physically separated from one another, an RF input circuit for each receiving antenna, and an integrated circuit arranged to process a received signal in a transport stream, comprising:
demodulating the received signal by a quadrature amplitude demodulator (1),
splitting the received signal into its parallel subbands using fast Fourier transformation (FFT),
amplitude and phase angle correcting of the parallel subbands, by an equalizer (5), for providing the information in the parallel subbands into a serial digital transport stream,
identifying and decision-making, by a decision-making apparatus (7), with regard to the physical position of the received modulation symbols in a locus diagram and generating softbits relating to the reliability of the decision,
deinterleaving subbands which are interleaved for transmission by a deinterleaver (9),
error correcting the transport stream with digital media data by an error correction system (FEC), **characterized in that**
each RF input circuit is connected to the integrated circuit which has a diversity processor (11) in the signal path between a point, at which the information in the parallel subbands is converted into the serial digital transport stream, and the deinterleaver (9), wherein the diversity processor (11) contains a databus (D-bus) for the external connections of the integrated circuit, and **in that**
comparing, by a comparison unit of the diversity processor, quality criteria, by means of which the reception quality of the transport stream preprocessed in its own reception path can be compared with the reception quality of a transport stream preprocessed in another reception path, in order to switch between the serial digital transport streams of different reception paths.

10. Integrated circuit for diversity operation of a digital signal receiver having an RF input wherein the integrated circuit is arranged to process a received signal in a transport stream, the integrated circuits comprising:
a quadrature amplitude demodulator (1) arranged to demodulate the received signal,
a device (3) for fast Fourier transformation (FFT) arranged to split the received signal into its parallel subbands,
an equalizer (5) arranged to amplitude and phase angle correct the parallel subbands in order to provide the information in the parallel subbands into a serial digital transport stream,
a decision-making apparatus (7) arranged to identify and to decision-make with regard to the physical position of the received modulation symbols in a locus diagram and to generate softbits relating to the reliability of the decision,
a deinterleaver (9) arranged to deinterleave subbands which are interleaved for transmission,
an error correction system (FEC) arranged to error correct the transport stream with digital media data, **characterized in that**
the integrated circuit comprises a diversity processor (11) in the signal path between a point, at which the information in the parallel subbands is converted into the serial digital transport stream, and the deinterleaver (9), wherein the diversity processor (11) contains a databus (D-bus) for the external connections of the integrated circuit , and **in that**
the diversity processor has a comparison unit arranged to compare quality criteria, by means of which the reception quality of the transport stream preprocessed in its own reception path can be compared with the reception quality of a transport stream preprocessed in another reception path, in order to switch between the serial digital transport streams of different reception paths.

11. Circuit arrangement for diversity operation of a receiver, such as a DVB receiver, with reception paths which have receiving antennas which are physically separated from one another, an RF input circuit for each receiving antenna, and a complex integrated circuit (OFDM-IC) for preprocessing a selected and digitized multiplexed signal (OFDM) in a transport stream, such as MPEG-2 transport stream, (MPEG-2 TS), with the complex integrated circuits (OFDM-IC) containing:
a quadrature amplitude modulator (1) arranged to recover the suppressed carrier signal,
a device (3) for fast Fourier transformation (FFT) arranged to split the received signal (OFDM) into its parallel subbands,
an equalizer (5) arranged to amplitude and phase angle correct the parallel subbands in order to convert the information in the parallel subbands into a serial digital transport stream,
a decision-making apparatus (7) arranged to identify and to decision-make with regard to the physical position of the received modulation symbols in a locus diagram and for generating softbits which identify the error between the nominal position and the actual position,
a deinterleaver (9) arranged to deinterleave subbands which are interleaved for transmission,
an error correction system (FEC) arranged to error correct the transport stream with digital media data, **characterized in that**
each RF input circuit is connected to a complex integrated circuit (OFDM-IC) which has a diversity processor (11) in the signal path between a point at which the information in the parallel subbands is converted into the serial digital transport stream, and the deinterleaver (9), which diversity processor (11) contains a databus (D-bus) for the external connections of the complex integrated circuit (OFDM-IC), **in that**
the diversity processor has a comparison unit for comparing quality criteria, by means of which the reception quality of the transport stream preprocessed in its own reception path can be compared with the reception quality of a transport stream preprocessed in another reception path, in order to switch between the serial digital transport streams of different reception paths.

## Patentansprüche

1. Digitalempfänger für Diversitätsbetrieb mit Empfangspfaden, die Empfangsantennen aufweisen, die physisch voneinander getrennt sind, einer Funkfrequenz-Eingangsschaltung für jede Empfangsantenne, und eine integrierte Schaltung, die eingerichtet ist ein empfangenes Signal in einem Transportstrom zu verarbeiten, wobei die integrierte Schaltung umfasst:
einen Quadraturamplitudendemodulator (1), eingerichtet um das empfangene Signal zu demodulieren,
eine Vorrichtung (3) für schnelle Fourier-Transformation (FFT), eingerichtet das empfangene Signal in seine parallelen Teilbänder aufzuteilen,
einen Equalizer (5), eingerichtet, um die parallelen Teilbänder bezüglich Amplitude und Phasenwinkel zu korrigieren, um die Information in den parallelen Teilbändern in einen seriellen digitalen Transportstrom bereitzustellen,
eine Entscheidungs-Vorrichtung (7), eingerichtet zum Identifizieren und zum Entscheiden bezüglich der physischen Position der empfangenen Modulationssymbole in einer Ortskurve, und um Softbits betreffend der Verlässlichkeit der Entscheidung zu erzeugen,
eine Entschränkungsvorrichtung (9), eingerichtet zum Entschränken von zur Übertragung verschränkten Teilbändern,
ein Fehlerkorrektursystem (FEC), eingerichtet um Fehler des Transportstroms mit digitalen Mediendaten zu korrigieren,
**dadurch gekennzeichnet, dass**
jede Funkfrequenz-Eingangsschaltung mit der integrierten Schaltung verbunden ist, die einen Diversitätsprozessor (11) in dem Signalpfad zwischen einem Punkt, an dem die Information in den parallelen Teilbändern in den seriellen digitalen Transportstrom ungewandelt wird und der Entschränkungsvorrichtung (9) umfasst, wobei der Diversitätsprozessor (11) einen Datenbus (D-Bus) für die externen Verbindungen des integrierten Schaltkreises enthält, und dass
der Diversitätsprozessor eine Vergleichseinheit umfasst, die eingerichtet ist, Qualitätskriterien zu vergleichen, durch die die Empfangsqualität des in seinem eigenem Empfangpfad vorverarbeiteten Transportstroms mit der Empfangsqualität in einem anderen Empfangspfad vorverarbeiteten Transportstroms verglichen werden kann, um zwischen den seriellen digitalen Transportströmen von verschiedenen Empfangspfaden zu wechseln.

2. Digitaler Empfänger gemäß Anspruch 1, wobei der Punkt, an dem die Information in dem parallelen Teilbändern in den seriellen digitalen Transportstrom ungewandelt wird, dem Equalizer (5) nachgeschaltet angeordnet ist.

3. Digitaler Empfänger gemäß Anspruch 1, wobei der Diversitätsprozessor (11) in der integrierten Schaltung zwischen der Entscheidungs-Vorrichtung (7), die eingerichtet ist zum Identifizieren und zum Entscheiden bezüglich der physischen Position der empfangenen Modulationssymbole in der Ortskurve, und der Entschränkungsvorrichtung (9) angeordnet ist, und wobei die Softbits als ein Qualitätskriterium für die Empfangsqualität der vorverarbeiteten Transportströme verwendet wird.

4. Digitaler Empfänger gemäß Anspruch 1, wobei die integrierte Schaltung einen Einstell-Eingang aufweist, der erstens ein spezifisches Einstellsignal verwendet, um die Schaltung in einen Master-Modus zu versetzen, in dem der Diversitätsprozessor (11) aktiviert wird, um den Transportstrom von der anderen integrierten Schaltung des anderen Empfangspfades zu empfangen, um die Qualität der Transportströme zu vergleichen, und zweitens die andere integrierte Schaltung mittels eines anderen Einstell-Signals in den Slave-Modus versetzt.

5. Digitaler Empfänger gemäß Anspruch 1, wobei das Einstell-Signal beim Wechseln in den Slave-Modus, den Betriebsstromverbrauch der Entschränkungsvorrichtung (9) und des Fehlerkorrektursystems FEC sperrt.

6. Digitaler Empfänger gemäß Anspruch 1, wobei ein weiterer Einstell-Eingang, der ein spezifisches Einstell-Signal verwendet, um den Signalpfad des Diversitätsprozessors (11) zu überbrücken, und/oder die Vergleichseinheit deaktiviert, so dass die integrierte Schaltung herkömmlich betrieben wird, ohne die vorverarbeiteten Transportströme zu vergleichen.

7. Digitaler Empfänger gemäß Anspruch 1, wobei der digitale Empfänger für eine Bildin-Bild-Anwendung im Nicht-Diversitätsbetrieb eingerichtet ist.

8. Digitaler Empfänger gemäß einem der vorstehenden Ansprüche, wobei der digitale Empfänger einen mobilen DVB-Empfänger umfasst.

9. Verfahren für den Diversitätsbetrieb eines Digitalsignal-Empfängers mit Empfangspfaden, die Empfangsantennen aufweisen, die physisch voneinander getrennt sind, einer Funkfrequenz-Eingangsschaltung für jede Empfangsantenne, und einer integrierten Schaltung, die eingerichtet ist, ein empfangenes Signal in einem Transportstrom zu verarbeiten, umfassend:
Demodulieren des empfangenen Signals durch einen Quadraturamplitudendemodulator (1),
Aufteilen des empfangenen Signals in seine parallelen Teilbänder unter Verwendung der schnellen Fourier-Transformation (FFT),
Korrigieren von Amplitude und Phasenwinkel der parallelen Teilbänder durch einen Equalizer (5), um die Information in den parallelen Teilbändern in einen seriellen digitalen Transportstrom bereitzustellen,
Identifizieren und Entscheiden durch eine Entscheidungs-Vorrichtung (7) in Bezug auf die physische Position der empfangenen Modulationssymbole in einer Ortskurve, und
Erzeugen von Softbits, die die Verlässlichkeit der Entscheidung betreffen, Entschränken der zur Übertragung verschränkten Teilbänder durch eine Entschränkungsvorrichtung (9),
Korrigieren von Fehlern des Transportstroms mit digitalen Mediendaten durch ein Fehlerkorrektursystem (FEC),
**dadurch gekennzeichnet, dass**
jede Funkfrequenz-Eingangsschaltung mit der integrierten Schaltung verbunden ist, die einen Diversitätsprozessor (11) in dem Signalpfad zwischen einem Punkt, an dem die Information in den parallelen Teilbändern in den seriellen digitalen Transportstrom ungewandelt wird, und der Entschränkungsvorrichtung (9) umfasst, wobei der Diversitätsprozessor (11) einen Datenbus (D-Bus) für die externen Verbindungen des integrierten Schaltkreises enthält, und durch
Vergleichen, durch eine Vergleichseinheit des Diversitätsprozessors, von Qualitätskriterien, mittels der die Empfangsqualität des in seinem eigenem Empfangpfad vorverarbeiteten Transportstroms mit der Empfangsqualität eines in einem anderen Empfangspfad vorverarbeiteten Transportstroms verglichen werden kann, um zwischen den seriellen digitalen Transportströmen von verschiedenen Empfangspfaden zu wechseln.

10. Integrierte Schaltung für den Diversitätsbetrieb eines Digitalsignal-Empfängers mit einem Funkfrequenz-Eingang, wobei die integrierte Schaltung eingerichtet ist, ein empfangenes Signal in einem Transportstrom zu verarbeiten, wobei die integrierte Schaltung umfasst:
einen Quadraturamplitudendemodulator (1), eingerichtet um das empfangene Signal zu demodulieren,
eine Vorrichtung (3) für schnelle Fourier-Transformation (FFT), eingerichtet das empfangene Signal in seine parallelen Teilbänder aufzuteilen,
einen Equalizer (5), eingerichtet, um die parallelen Teilbänder bezüglich Amplitude und Phasenwinkel zu korrigieren, um die Information in den parallelen Teilbändern in einen seriellen digitalen Transportstrom bereitzustellen,
eine Entscheidungs-Vorrichtung (7), eingerichtet zum Identifizieren und zum Entscheiden bezüglich der physischen Position der empfangenen Modulationssymbole in einer Ortskurve, und um Softbits betreffend der Verlässlichkeit der Entscheidung zu erzeugen,
eine Entschränkungsvorrichtung (9), eingerichtet zum Entschränken von zur Übertragung verschränkter Teilbänder,
ein Fehlerkorrektursystem (FEC), eingerichtet, um Fehler des Transportstroms mit digitalen Mediendaten zu korrigieren,
**dadurch gekennzeichnet, dass**
die integrierte Schaltung in dem Signalpfad einen Diversitätsprozessor (11) zwischen einem Punkt, an dem die Information in den parallelen Teilbändern in den seriellen digitalen Transportstrom ungewandelt wird, und der Entschränkungsvorrichtung (9) umfasst, wobei der Diversitätsprozessor (11) einen Datenbus (D-Bus) für die externen Verbindungen des integrierten Schaltkreises enthält, und dass
der Diversitätsprozessor eine Vergleichseinheit umfasst, die eingerichtet ist, Qualitätskriterien zu vergleichen, mittels der die Empfangsqualität des in seinem eigenem Empfangpfad vorverarbeiteten Transportstroms mit der Empfangsqualität in einem anderen Empfangspfad vorverarbeiteten Transportstroms verglichen werden kann, um zwischen den seriellen digitalen Transportströmen von verschiedenen Empfangspfaden zu wechseln.

11. Schaltungsanordnung für den Diversitätsbetrieb eines Empfängers, wie eines DVB-Empfängers, mit Empfangspfaden, die Empfangsantennen aufweisen, die physisch voneinander getrennt sind, einer Funkfrequenz-Eingangsschaltung für jede Empfangsantenne, und einer komplexen integrierten Schaltung (OFDM-IC), zum Vorverarbeiten eines ausgewählten und digitalisierten Multiplexsignals (OFDM) in einem Transportstrom, wie einem MPEG-2 Transportstrom, (MPEG-2 TS), wobei die komplexe integrierte Schaltung (OFDM-IC) enthalten:
einen Quadraturamplitudendemodulator (1), eingerichtet um das unterdrückte Trägersignal wiederherzustellen,
eine Vorrichtung (3) für schnelle Fourier-Transformation (FFT), eingerichtet, das empfangene Signal (OFDM) in seine parallelen Teilbänder aufzuteilen,
einen Equalizer (5), eingerichtet, um die parallelen Teilbänder bezüglich Amplitude und Phasenwinkel zu korrigieren, um die Information in den parallelen Teilbändern in einen seriellen digitalen Transportstrom umzuwandeln,
eine Entscheidungs-Vorrichtung (7), eingerichtet zum Identifizieren und zum Entscheiden bezüglich der physisch Position der empfangenen Modulationssymbole in einer Ortskurve, und um Softbits zu erzeugen, die den Fehler zwischen der Nominalen Position und der tatsächlichen Position identifizieren,
eine Entschränkungsvorrichtung (9), eingerichtet zum Entschränken von zur Übertragung verschränkten Teilbändern,
ein Fehlerkorrektursystem (FEC), eingerichtet, um Fehler des Transportstroms mit digitalen Mediendaten zu korrigieren,
**dadurch gekennzeichnet, dass**
jede Funkfrequenz-Eingangsschaltung mit einer komplexen integrierten Schaltung (OFDM-IC) verbunden ist, die einen Diversitätsprozessor (11) in dem Signalpfad zwischen einem Punkt, an dem die Information in den parallelen Teilbändern in den seriellen digitalen Transportstrom ungewandelt wird, und der Entschränkungsvorrichtung (9) umfasst, wobei der Diversitätsprozessor (11) einen Datenbus (D-Bus) für die externen Verbindungen des komplexen integrierten Schaltkreises (OFDM-IC) enthält, und dass
der Diversitätsprozessor eine Vergleichseinheit umfasst, um Qualitätskriterien zu vergleichen, mittels der die Empfangsqualität des in seinem eigenem Empfangpfad vorverarbeiteten Transportstroms mit der Empfangsqualität in einem anderen Empfangspfad vorverarbeiteten Transportstroms verglichen werden kann, um zwischen den seriellen digitalen Transportströmen von verschiedenen Empfangspfaden zu wechseln.

## Revendications

1. Récepteur numérique pour mettre en oeuvre une opération de diversité avec des chemins de réception qui ont des antennes de réception qui sont physiquement séparées les unes des autres, un circuit d'entrée de fréquence radio (RF) pour chaque antenne de réception, et un circuit intégré agencé pour traiter un signal reçu dans un flux de transport, le circuit intégré comprenant :
un démodulateur d'amplitude en quadrature (1) agencé pour démoduler le signal reçu,
un dispositif (3) pour une transformée de Fourier rapide (FFT) agencé pour scinder le signal reçu en ses sous-bandes parallèles,
un égaliseur (5) agencé pour corriger en angle de phase et amplitude les sous-bandes parallèles afin de fournir les informations dans les sous-bandes parallèles dans un flux de transport numérique en série,
un dispositif de prise de décision (7) agencé pour identifier et prendre une décision relativement à la position physique des symboles de modulation reçus dans un diagramme de lieu géométrique et pour générer des bits souples relatifs à la fiabilité de la décision,
un désentrelaceur (9) agencé pour désentrelacer des sous-bandes qui sont entrelacées pour une transmission,
un système de correction des erreurs (FEC) agencé pour corriger les erreurs du flux de transport avec des données multimédia numériques, **caractérisé en ce que**
chaque circuit d'entrée de fréquence radio (RF) est connecté au circuit intégré qui a un processeur de diversité (11) dans le chemin de signal entre un point, auquel les informations contenues dans les sous-bandes parallèles sont converties en le flux de transport numérique en série, et le désentrelaceur (9), dans lequel le processeur de diversité (11) contient un bus de données (D-Bus) pour les connexions externes du circuit intégré, et **en ce que**
le processeur de diversité a une unité de comparaison agencée pour comparer des critères de qualité, par le biais de laquelle la qualité de réception du flux de transport prétraité dans son propre chemin de réception peut être comparée à la qualité de réception d'un flux de transport prétraité dans un autre chemin de réception, afin de commuter entre les flux de transport numériques en série de différents chemins de réception.

2. Récepteur numérique selon la revendication 1, dans lequel le point auquel les informations contenues dans les sous-bandes parallèles sont converties en le flux de transport numérique en série est situé en aval de l'égaliseur(5).

3. Récepteur numérique selon la revendication 1, dans lequel le processeur de diversité (11) dans le circuit intégré est situé entre le dispositif de prise de décision (7) agencé pour identifier et prendre une décision relativement à la position physique des symboles de modulation reçus dans le diagramme de lieu géométrique et le désentrelaceur (9), et dans lequel les bits souples sont utilisés comme un critère de qualité pour la qualité de réception des flux de transport prétraités.

4. Récepteur numérique selon la revendication 1, dans lequel le circuit intégré présente une entrée définie laquelle, d'une part, utilise un signal défini spécifique pour commuter le circuit vers un mode maître, où le processeur de diversité (11) est activé pour recevoir le flux de transport à partir de l'autre circuit intégré de l'autre chemin de réception afin de comparer la qualité des flux de transport et, d'autre part, commute ledit autre circuit intégré au mode esclave par le biais d'un autre signal défini.

5. Récepteur numérique selon la revendication 1, dans lequel lors de la commutation au mode esclave, le signal défini inhibe la consommation en courant d'exploitation du désentrelaceur (9) et du système de correction des erreurs (FEC).

6. Récepteur numérique selon la revendication 1, dans lequel une entrée définie supplémentaire utilise un signal défini spécifique pour ponter le chemin de signal du processeur de diversité et/ou désactive l'unité de comparaison de sorte que le circuit intégré fonctionne de manière conventionnelle sans comparer les flux de transport prétraités.

7. Récepteur numérique selon la revendication 1, dans lequel le récepteur numérique est configuré pour une application d'incrustation d'image pour une opération de non-diversité.

8. Récepteur numérique selon l'une quelconque des revendications précédentes, dans lequel le récepteur numérique comporte un récepteur DVB mobile.

9. Procédé pour mettre en oeuvre une opération de diversité d'un récepteur de signaux numériques avec des chemins de réception qui ont des antennes de réception qui sont physiquement séparées les unes des autres, un circuit d'entrée de fréquence radio (RF) pour chaque antenne de réception, et un circuit intégré agencé pour traiter un signal reçu dans un flux de transport, comprenant les étapes consistant à :
démoduler le signal reçu au moyen d'un démodulateur d'amplitude en quadrature (1),
scinder le signal reçu en ses sous-bandes parallèles au moyen d'une transformée de Fourier rapide (FFT),
corriger en angle de phase et amplitude les sous-bandes parallèles, au moyen d'un égaliseur (5) afin de fournir les informations dans les sous-bandes parallèles dans un flux de transport numérique en série,
identifier et déterminer, au moyen d'un dispositif de prise de décision (7), la position physique des symboles de modulation reçus dans un diagramme de lieu géométrique et générer des bits souples relatifs à la fiabilité de la décision,
désentrelacer des sous-bandes qui sont entrelacées pour une transmission au moyen d'un désentrelaceur (9),
corriger les erreurs du flux de transport avec des données multimédia numériques au moyen d'un système de correction des erreurs (FEC), **caractérisé en ce que**
chaque circuit d'entrée de fréquence radio (RF) est connecté au circuit intégré qui a un processeur de diversité (11) dans le chemin de signal entre un point, auquel les informations contenues dans les sous-bandes parallèles sont converties en le flux de transport numérique en série, et le désentrelaceur (9), dans lequel le processeur de diversité (11) contient un bus de données (D-Bus) pour les connexions externes du circuit intégré, et **en ce qu'**il comporte l'étape consistant à
comparer, par une unité de comparaison du processeur de diversité, des critères de qualité, au moyen de quoi la qualité de réception du flux de transport prétraité dans son propre chemin de réception peut être comparée à la qualité de réception d'un flux de transport prétraité dans un autre chemin de réception, afin de commuter entre les flux de transport numériques en série de différents chemins de réception.

10. Circuit intégré pour mettre en oeuvre une opération de diversité d'un récepteur de signaux numériques ayant une entrée RF où le circuit intégré est agencé pour traiter un signal reçu dans un flux de transport, les circuit s intégrés comprenant :
un démodulateur d'amplitude en quadrature (1) agencé pour démoduler le signal reçu,
un dispositif (3) pour une transformée de Fourier rapide (FFT) agencé pour scinder le signal reçu en ses sous-bandes parallèles,
un égaliseur (5) agencé pour corriger en angle de phase et amplitude les sous-bandes parallèles afin de fournir les informations dans les sous-bandes parallèles dans un flux de transport numérique en série,
un dispositif de prise de décision (7) agencé pour identifier et prendre une décision relativement à la position physique des symboles de modulation reçus dans un diagramme de lieu géométrique et pour générer des bits souples relatifs à la fiabilité de la décision,
un désentrelaceur (9) agencé pour désentrelacer des sous-bandes qui sont entrelacées pour une transmission,
un système de correction des erreurs (FEC) agencé pour corriger les erreurs du flux de transport avec des données multimédia numériques, **caractérisé en ce que**
le circuit intégré comporte un processeur de diversité (11) dans le chemin de signal entre un point, auquel les informations contenues dans les sous-bandes parallèles sont converties en le flux de transport numérique en série, et le désentrelaceur (9), dans lequel le processeur de diversité (11) contient un bus de données (D-Bus) pour les connexions externes du circuit intégré, et **en ce que**
le processeur de diversité a une unité de comparaison agencée pour comparer des critères de qualité, par le biais de quoi la qualité de réception du flux de transport prétraité dans son propre chemin de réception peut être comparée à la qualité de réception d'un flux de transport prétraité dans un autre chemin de réception, afin de commuter entre les flux de transport numériques en série de différents chemins de réception.

11. Dispositif de circuit pour mettre en oeuvre une opération de diversité d'un récepteur, comme, par exemple, un récepteur DVB, avec des chemins de réception qui ont des antennes de réception qui sont physiquement séparées les unes des autres, un circuit d'entrée de fréquence radio (RF) pour chaque antenne de réception, et un circuit intégré complexe (OFDM-IC) pour prétraiter un signal multiplexé numérisé et sélectionné (OFDM) dans un flux de transport, comme, par exemple le flux de transport MPEG-2, (MPEG-2 TS), avec les circuits intégrés complexes (OFDM-IC) comportant :
un modulateur d'amplitude en quadrature (1) agencé pour récupérer le signal porteur supprimé,
un dispositif (3) pour une transformée de Fourier rapide (FFT) agencé pour scinder le signal reçu (OFDM) en ses sous-bandes parallèles,
un égaliseur (5) agencé pour corriger en angle de phase et amplitude les sous-bandes parallèles afin de convertir les informations dans les sous-bandes parallèles en un flux de transport numérique en série,
un dispositif de prise de décision (7) agencé pour identifier et prendre une décision relativement à la position physique des symboles de modulation reçus dans un diagramme de lieu géométrique et pour générer des bits souples qui identifient l'erreur entre la position nominale et la position en cours,
un désentrelaceur (9) agencé pour désentrelacer des sous-bandes qui sont entrelacées pour une transmission,
un système de correction des erreurs (FEC) agencé pour corriger les erreurs du flux de transport avec des données multimédia numériques, **caractérisé en ce que**
chaque circuit d'entrée de fréquence radio (RF) est connecté à un circuit intégré complexe (OFDM-IC) qui comporte un processeur de diversité (11) dans le chemin de signal entre un point, auquel les informations contenues dans les sous-bandes parallèles sont converties en le flux de transport numérique en série, et le désentrelaceur (9), lequel processeur de diversité (11) contient un bus de données (D-Bus) pour les connexions externes du circuit intégré complexe (OFDM-IC), **en ce que**
le processeur de diversité a une unité de comparaison agencée pour comparer des critères de qualité, par le biais de quoi la qualité de réception du flux de transport prétraité dans son propre chemin de réception peut être comparée à la qualité de réception d'un flux de transport prétraité dans un autre chemin de réception, afin de commuter entre les flux de transport numériques en série de différents chemins de réception.
